# EUROPÄISCHE PATENTSCHRIFT

(11) **EP 1 720 122 B1**
(45) Veröffentlichungstag und Bekanntmachung des Hinweises auf die Patenterteilung: **19.10.2011**
(21) Anmeldenummer: 06007847.4
(22) Anmeldetag: 13.04.2006
(51) Int. Cl.: G06K 19/077

(54) **Verfahren zur Herstellung eines tragbaren Datenträgers**
Method for manufacturing a portable data carrier
Procédé destiné à la création d'un support de données portatif

(30) Priorität: 29.04.2005 DE 102005020100
(43) Veröffentlichungstag der Anmeldung: 08.11.2006
(73) Patentinhaber: Giesecke & Devrient GmbH, 81677 München (DE)
(72) Erfinder: Kluge, Stefan, 80997 München (DE)

(56) Entgegenhaltungen:
- DE-A1- 10 101 330
- DE-A1- 10 251 317
- FR-A- 2 828 953
- US-A1- 2002 190 364
- US-B1- 6 386 459

## Beschreibung

Die Erfindung betrifft ein Verfahren zur Herstellung eines tragbaren Datenträgers. Weiterhin betrifft die Erfindung ein Halbzeug zur Herstellung eines tragbaren Datenträgers und einen tragbaren Datenträger.

Im Rahmen des Herstellungsprozesses für einen tragbaren Datenträger besteht eine übliche Vorgehensweise darin, eine elektronische Schaltung ganz oder teilweise mit einem Material, insbesondere mit einem Kunststoffmaterial zu umgeben. Bei der elektronischen Schaltung handelt es sich in der Regel um einen integrierten Schaltkreis, insbesondere um einen Mikrocontroller. Beispielsweise kann zur Herstellung eines tragbaren Datenträgers, der als eine Chipkarte ausgebildet ist, die elektronische Schaltung in einen Kartenkörper eingesetzt werden, wobei anschließend noch weitere Herstellungsschritte ausgeführt werden. Insbesondere bei der Verwendung von Kunststoffmaterialien kann es im Rahmen des Herstellungsprozesses zu elektrostatischen Aufladungen kommen, durch die die elektronische Schaltung des tragbaren Datenträgers in einen undefinierten Zustand versetzt wird. Wenn sich die elektronische Schaltungin einem undefinierten Zustand befindet, ist der tragbare Datenträger nicht nutzbar. Um den tragbaren Datenträger dennoch einer Nutzung zuführen zu können, ist es erforderlich, die elektronische Schaltung vom undefinierten Zustand wieder in einen definierten Zustand zu überführen.

Um eine Überführung von einem undefinierten in einen definierten Zustand zu ermöglichen, verfügen insbesondere als Mikrocontroller ausgebildete elektronischen Schaltungen häufig über eine Funktion, die als Reset bezeichnet wird und die elektronische Schaltung ausgehend von einem beliebigen Zustand in einen Grundzustand zurücksetzt. Dieses Zurücksetzen wird in der Regel durch Anlegen eines dafür vorgesehenen Signals an die elektronische Schaltung veranlasst.

DE 10101330 A1 zeigt eine Schaltungsanordnung zum Schutz der Schaltung vor mechanischer Manipulation. In Antwort auf eine erkannte mechanische Manipulation einer über der schaltungsangeordneten Schutzschicht wird die Funktion der Schaltung gesperrt. Einen ähnlichen Manipulationsschutz zeigt DE 102 51317 A1. Die Ansprüche sind gegen dieses Dokumment abgegenzt.

Gemäß US 6,386,459 B1 wird eine kontaktlose Karte derart mit einer Kontaktbrücke versehen, dass die Karte zunächst funktionsunfähig ist. Der Karteninhaber muss vor der erstmaligen Nutzung der Karte eine Ecke der Karte abbrechen, um die Kontaktbrücke zu entfernen. Eine ähnliche Lösung zeigt US 2002/0190364 A1.

Elektronische Schaltungen mit Reset-Funktion werden auch bei tragbaren Datenträgern, insbesondere bei Chipkarten, eingesetzt. Beispielsweise wird bei kontaktbehafteten Chipkarten während der Anschaltsequenz gemäß der Norm ISO/IEC 7816-3 ein Reset-Signal von außen an eine dafür vorgesehene Kontaktfläche der Chipkarte angelegt. Allerdings können auf diese Weise nur elektronische Schaltungen von Chipkarten zurückgesetzt werden, die über eine Kontaktfläche zur berührenden Kontaktierung verfügen.

Aus der WO 01/82222 A1 ist ein Datenträger mit einer ersten Schnittstelle für ein erstes Kommunikationssignal und einer zweiten Schnittstelle für ein zweites Kommunikationssignal bekannt. Aus den Kommunikationssignalen wird jeweils ein Taktsignal abgeleitet und mittels je eines Frequenzsensors geprüft. Ein Zurücksetzen eines Prozessors erfolgt dann, wenn beim ersten Kommunikationssignal eine erste Taktfrequenz oder beim zweiten Kommunikationssignal eine zweite Taktfrequenz unterschritten wird.

Die US 5 068 521 B1 offenbart eine kontaktlose Chipkarte, die eine Batterie aufweist und deren CPU über eine Reset-Leitung zurückgesetzt wird. Nach dem Zurücksetzen der CPU wird die Chipkarte insgesamt als ein Vergusskörper ausgebildet, so dass die Reset-Leitung nicht mehr zugänglich ist. Die CPU bleibt nach dem Zurücksetzen solange in Betrieb, bis die Batterie erschöpft ist. Weiterhin offenbart die US 5 068 521 B1 eine kontaktlose Chipkarte, die über eine Einrichtung zur Detektion eines Reset-Signals verfügt. Wenn ein Reset-Signal detektiert wird, veranlasst diese Einrichtung eine Initialisierung der CPU. Das Reset-Signal wird mittels einer elektromagnetischen Welle kontaktlos übertragen. Die Detektion des Reset-Signals erfolgt über die Frequenz oder die Amplitude der elektromagnetischen Welle.

Die bekannten Vorgehensweisen sind jedoch auf Ausgestaltungen des tragbaren Datenträgers beschränkt, bei denen die elektronische Schaltung von außen zugänglich ist. Es besteht allerdings auch die Möglichkeit, dass eine solche Zugänglichkeit nicht vorgesehen ist. Dies kann beispielsweise dann der Fall sein, wenn für den Betrieb der elektronischen Schaltung eine Zugänglichkeit von außen nicht erforderlich ist. Wenn die elektronische Schaltung bei der Herstellung des tragbaren Datenträgers zu einem Zeitpunkt in einen undefinierten Zustand versetzt wird, zu dem die elektronische Schaltung von außen nicht mehr zugänglich ist, wird der tragbare Datenträger unbrauchbar.

Der Erfindung liegt die Aufgabe zugrunde, möglichst zuverlässig zu verhindern, dass eine elektronische Schaltung eines tragbaren Datenträgers bei der Herstellung des tragbaren Datenträgers dauerhaft in einen undefinierten Zustand versetzt wird und dadurch der tragbare Datenträger unbrauchbar wird.

Diese Aufgabe wird durch ein Herstellungsverfahren mit der Merkmalskombination des Anspruchs 1 gelöst.

Beim erfindungsgemäßen Verfahren zur Herstellung eines tragbaren Datenträgers wird wenigstens eine elektronische Schaltung mit einer elektrisch leitenden Struktur verbunden, mit deren Hilfe eine Überführung der elektronischen Schaltung in einen definierten Zustand ausgelöst werden kann. Die elektronische Schaltung und die elektrisch leitende Struktur werden derart von einem Material umgeben, dass die elektrisch leitende Struktur für eine berührende Kontaktierung nicht mehr zugänglich ist. Das umgebende Material wird mit Hilfe eines Werkzeugs teilweise entfernt und dabei das Überführen der elektronischen Schaltung in den definierten Zustand ausgelöst.

Die Erfindung hat den Vorteil, dass mit relativ geringem Aufwand die Ausbeute bei der Herstellung von tragbaren Datenträgern erhöht werden kann. Sollte die elektronische Schaltung eines tragbaren Datenträgers im Rahmen des Herstellungsprozesses beispielsweise durch elektrostatische Aufladung in einen undefinierten Zustand gebracht werden, so wird mit dem erfindungsgemäßen Verfahren eine zuverlässige Rückführung der elektronischen Schaltung in einen definierten Zustand erreicht. Auf diese Weise kann verhindert werden, dass der tragbare Datenträger infolge des undefinierten Zustands der elektronischen Schaltung dauerhaft unbrauchbar wird.

Besonders vorteilhaft ist es, wenn das Überführen der elektronischen Schaltung in den definierten Zustand mit demselben Werkzeug ausgelöst wird, mit dem das Material entfernt wird. Dadurch ist es möglich, für das erfindungsgemäße Verfahren herkömmliche Fertigungseinrichtungen einzusetzen, die nicht oder nur geringfügig abgewandelt sind. Außerdem wird ein hoher Durchsatz erreicht, da kein eigener Verfahrensschritt für das Auslösen des Überführens in den undefinierten Zustand erforderlich ist.

Das erfindungsgemäße Verfahren ist insbesondere so ausgelegt, dass beim Entfernen des Materials zeitweise ein elektrischer Kontakt zwischen dem Werkzeug und der elektrisch leitenden Struktur ausgebildet wird. Über diesen Kontakt kann ein Signal übertragen werden, welches das Überführen der elektronischen Schaltung in einen definierten Zustand auslöst. Weiterhin kann vorgesehen werden, dass beim Entfernen des Materials mehrere Elemente der elektrisch leitenden Struktur miteinander elektrisch leitend verbunden werden.

Im Rahmen des erfindungsgemäßen Verfahrens kann vorgesehen sein, dass beim Entfernen des Materials die elektrisch leitende Struktur teilweise entfernt wird. Dies vereinfacht das erfindungsgemäße Verfahren erheblich, da keine Maßnahmen zum Schutz der elektrisch leitenden Struktur erforderlich sind. Außerdem werden dadurch Verfahrensvarianten ermöglicht, bei denen es zwangsweise zu einer Entfernung von Teilen der elektrisch leitenden Struktur kommt.

Gemäß einer Ausgestaltung des erfindungsgemäßen Verfahrens wird das Überführen der elektronischen Schaltung in den definierten Zustand bei der Ausbildung einer Ausnehmung ausgelöst. Die Ausnehmung wird insbesondere mit Hilfe eines Werkzeugs ausgebildet. Die Abmessungen des Werkzeugs sollen gegebenenfalls so gewählt sein, daß es die mehreren Elemente der elektrisch leitenden Struktur miteinander elektrisch leitend verbunden kann. Zudem können die Abmessungen des Werkzeugs so gewählt sein, dass der minimale Abstand zwischen Anschlusskontakten, die im Bereich der Ausnehmung angeordnet sind, bei der Ausbildung der Ausnehmung durch das Werkzeug nicht überbrückt wird. Dadurch ist sichergestellt, dass durch das Werkzeug kein unerwünschter Kurzschluss zwischen den Anschlusskontakten ausgelöst wird. In die Ausnehmung kann eine Komponente des tragbaren Datenträgers, insbesondere eine weitere elektronische Schaltung, eingesetzt werden. Dies hat den Vorteil, dass die elektrisch leitende Struktur nach Fertigstellung des tragbaren Datenträgers nicht mehr zugänglich ist und ein unerwünschtes Überführen der elektronische Schaltung in einen definierten Zustand bei der Nutzung des tragbaren Datenträgers nicht erfolgen kann. Ebenso ist es auch möglich, die Ausnehmung als ein Durchgangsloch auszubilden. Das Durchgangsloch kann ganz am Ende des Herstellungsprozesses ausgebildet werden, so dass bei dieser Variante das Überführen der elektronischen Schaltung in den definierten Zustand zu einem sehr späten Zeitpunkt erfolgen kann.

Bei einer weiteren Ausgestaltung des erfindungsgemäßen Verfahrens wird das Überführen der elektronischen Schaltung in den definierten Zustand bei der Ausbildung der Außenkontur des tragbaren Datenträgers ausgelöst. Ein materialabtragender Eingriff in den tragbaren Datenträger selbst ist dabei nicht erforderlich.

Die Erfindung bezieht sich weiterhin auf ein Halbzeug zur Herstellung wenigstens eines tragbaren Datenträgers. Das erfindungsgemäße Halbzeug weist wenigstens eine elektronische Schaltung auf, die mit einer elektrisch leitenden Struktur verbunden ist. Durch eine berührende Kontaktierung der elektrisch leitenden Struktur ist eine Überführung der elektronischen Schaltung in einen definierten Zustand auslösbar. Die Besonderheit des erfindungsgemäßen Halbzeugs besteht darin, dass die elektrisch leitende Struktur derart von einem Material umgeben ist, dass diese für eine berührende Kontaktierung nicht zugänglich ist.

Die elektrisch leitende Struktur ist vorzugsweise so ausgebildet, dass sie mehrere benachbart zueinander angeordnete Elemente aufweist. Bei einer Ausgestaltung des erfindungsgemäßen Halbzeugs erstreckt sich die elektrisch leitende Struktur über die für den tragbaren Datenträger vorgesehene Außenkontur hinaus. Dies ermöglicht eine Überführung der elektronischen Schaltung in einen definierten Zustand beim Heraustrennen des tragbaren Datenträgers aus dem Halbzeug. Bei einer weiteren Ausgestaltung des erfindungsgemäßen Halbzeugs ist die elektrisch leitende Struktur in einem Bereich angeordnet, der für die Ausbildung einer Ausnehmung vorgesehen ist. Diese Ausgestaltung ist für eine Überführung der elektronischen Schaltung in einen definierten Zustand bei der Herstellung der Aussparung vorgesehen.

Die Erfindung wird nachstehend anhand der in der Zeichnung dargestellten Ausführungsbeispiele erläutert, bei denen der tragbare Datenträger jeweils als eine Chipkarte ausgebildet ist. Die Erfindung ist allerdings nicht auf Chipkarten beschränkt, sondern bezieht sich gleichermaßen auch auf andere tragbare Datenträger. Dabei ist als ein tragbarer Datenträger im Sinn der Erfindung ein Rechnersystem anzusehen, bei dem die Ressourcen, d.h. Speicherressourcen und/oder Rechenkapazität (Rechenleistung) begrenzt sind, z.B. eine Chipkarte (Smart Card, Mikroprozessor-Chipkarte) oder ein Token oder ein Chipmodul zum Einbau in eine Chipkarte oder in ein Token. Der tragbare Datenträger hat einen Körper, in dem eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Der tragbare Datenträger kann weiter eine oder mehrere beliebige Schnittstellen für eine kontaktlose und/ oder kontaktbehaftete Kommunikation mit einem Lesegerät oder Datenverarbeitungssystem (z.B. Personal Computer, Workstation, Server) haben.

Es zeigen:
- Fig.1, 2, 3: Momentaufnahmen zu unterschiedlichen Zeiten während einer ersten Variante des erfindungsgemäßen Verfahrens zur Herstellung einer Chipkarte jeweils in einer schematischen Schnittdarstellung,
- Fig. 4: die Chipkarte im gleichen Bearbeitungszustand wie in Fig. 3 in einer schematischen Aufsicht,

- Fig. 5: die gemäß der ersten Variante des erfindungsgemäßen Verfahrens hergestellte Chipkarte im fertig gestellten Zustand in einer den Fig.1 bis 3 entsprechenden Darstellung,
- Fig. 6: eine gemäß einer zweiten Variante des erfindungsgemäßen Verfahrens hergestellte Chipkarte im fertig gestellten Zustand in einer Fig. 5 entsprechenden Darstellung,
- Fig. 7: die Chipkarte aus Fig. 6 in einer Fig. 4 entsprechenden Darstellung,
- Fig. 8: eine gemäß einer dritten Variante des erfindungsgemäßen Verfahrens hergestellte Chipkarte im fertig gestellten Zustand in einer Fig. 5 entsprechenden Darstellung und
- Fig. 9: die Chipkarte aus Fig. 8 zu einem früheren Zeitpunkt, zu dem sie noch Bestandteil eines Bogens ist, in Fig. 4 entsprechenden Darstellung.

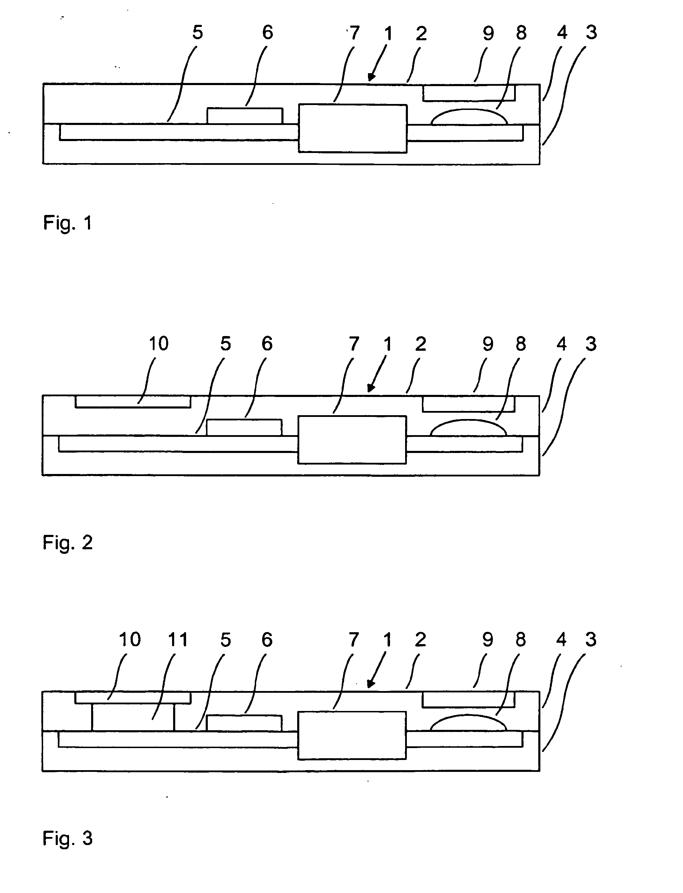

Fig. 1, 2 und 3 zeigen Momentaufnahmen zu unterschiedlichen Zeiten während einer ersten Variante des erfindungsgemäßen Verfahrens zur Herstellung einer Chipkarte 1 jeweils in einer schematischen Schnittdarstellung. Die Darstellung ist nicht streng auf eine Schnittebene begrenzt, sondern zeigt auch gegeneinander versetzt angeordnete Komponenten der Chipkarte 1. Es wurde daher auf die Verwendung von Schraffuren verzichtet. Aus Gründen der Anschaulichkeit ist die Darstellung jeweils stark unmaßstäblich ausgeführt.

Die Chipkarte 1 weist einen Kartenkörper 2 auf, der bzgl. seiner Abmessungen gemäß der Norm ISO/ IEC 7810 ausgebildet sein kann und beim dargestellten Ausführungsbeispiel aus einer unteren Halbschale 3 und einer oberen Halbschale 4 zusammengesetzt ist. Die Halbschalen 3 und 4 sind vorzugsweise aus Kunststoff gefertigt. Zwischen den Halbschalen 3 und 4 ist eine flexible Leiterplatte 5 mit einem ersten Mikrocontroller 6, einer Batterie 7, einen Taster 8 und einer Anzeigeeinrichtung 9 angeordnet. Der erste Mikrocontroller 6 dient der Ansteuerung der Anzeigevorrichtung 9. Die Versorgungsspannung zum Betrieb des ersten Mikrocontrollers 6 und der Anzeigevorrichtung 9 wird von der Batterie 7 bereitgestellt. Mit Hilfe des Tasters 8 kann die Anzeigevorrichtung 9 aktiviert werden. Alternativ zur flexiblen Leiterplatte 5 kann auch eine Kunststofffolie verwendet werden, auf welche Leiterbahnen aufgebracht sind, beispielsweise durch Bedrucken mit Silberleitpaste.

Zu dem in Fig. 1 dargestellten Zeitpunkt sind bereits sämtliche vorstehend genannten Komponenten der Chipkarte 1 vorhanden und elektrisch miteinander verbunden. Der erste Mikrocontroller 6 ist bereits aktiv und das Herstellungsverfahren befindet sich in einem Endstadium. Vor dem in Fig. 1 dargestellten Zeitpunkt wurde eine Vielzahl von Verfahrensschritten durchgeführt und es besteht somit die Gefahr, dass der erste Mikrocontroller 6 durch elektrostatische Aufladungseffekte in einen undefinierten Zustand gebracht wurde. Falls sich der erste Mikrocontroller 6 tatsächlich in einen undefinierten Zustand befindet, kann die Chipkarte 1 nur dann ihrer bestimmungsgemäßen Verwendung zugeführt werden, wenn es gelingt, den ersten Mikrocontroller 6 in einen definierten Zustand zurückzusetzen. Allerdings ist der erste Mikrocontroller 6 vollständig in den Kartenkörper 2 eingebettet und somit von außen nicht mehr zugänglich. Im Folgenden wird erläutert, wie ein Zurücksetzen des ersten Mikrocontrollers 6 im Rahmen des erfindungsgemäßen Verfahrens dennoch möglich ist.

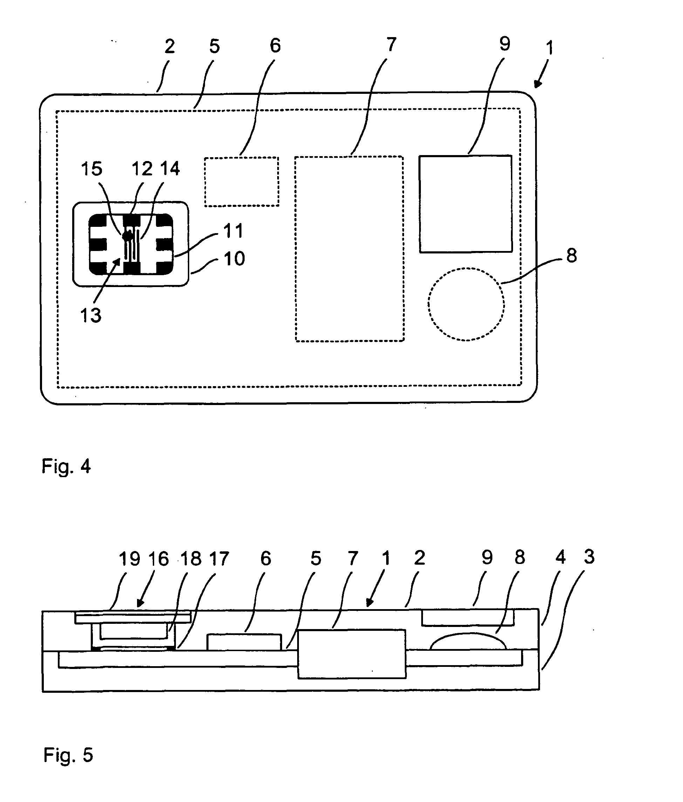

Wie aus Fig. 2 hervorgeht, wird beim erfindungsgemäßen Verfahren in die obere Halbschale 4 des Kartenkörpers 2 eine erste Vertiefung 10 gefräst. Die erste Vertiefung 10 wird in einem Bereich des Kartenkörpers 2 ausgebildet, in dem außer der Leiterplatte 5 keine weitere Komponente der Chipkarte 1 angeordnet ist. Innerhalb der ersten Vertiefung 10 wird eine zweite Vertiefung 11 in die obere Halbschale 4 des Kartenkörpers 2 gefräst, die eine kleinere laterale Ausdehnung als die erste Vertiefung 10 aufweist und sich zumindest bis zur Leiterplatte 5 erstreckt. Dies ist in Fig. 3 dargestellt. Die in diesem Bereich auf der Leiterplatte 5 ausgebildeten Strukturen sind in Fig. 4 dargestellt.

Fig. 4 zeigt die Chipkarte 1 im gleichen Bearbeitungszustand wie in Fig. 3 in einer schematischen Aufsicht. Dabei sind auch solche Komponenten angedeutet, die sich im Inneren der Chipkarte 1 befinden. Im Bereich der zweiten Vertiefung 11 sind auf der Leiterplatte 5 Anschlusskontakte 12 angeordnet. Zwischen zwei gegenüberliegenden Anschlusskontakten 12 ist eine Elektrodenstruktur 13 ausgebildet. Die Elektrodenstruktur 13 weist zwei kammartig ineinander greifende Elektroden 14 auf, die mit je einem der Anschlusskontakte 12 verbunden sind und sich bis in die Nähe des jeweils gegenüberliegenden Anschlusskontaktes 12 erstrecken, diesen jedoch nicht berühren. Die Verschaltung der beiden mit den Elektroden 14 verbundenen Anschlusskontakte 12 ist in Fig. 4 nicht dargestellt und kann beispielsweise so erfolgen, dass der eine Anschlusskontakt 12 an Masse und der andere Anschlusskontakt 12 an einen Reset-Eingang des ersten Mikrocontrollers 6 angeschlossen ist. Dabei kann der Reset-Eingang des ersten Mikrocontrollers 6 über einen Pull-up-Widerstand auf Versorgungsspannungsniveau liegen. Die Anschlusskontakte 12 und die Elektrodenstruktur 13 müssen nicht in einer Ebene liegen, sondern können beispielsweise auf zwei verschiedenem Seiten der Leiterplatte 5 liegen.

In Fig. 4 ist weiterhin der Querschnitt eines Fräswerkzeugs 15 symbolisch eingezeichnet, mit dem die erste Vertiefung 10 und die zweite Vertiefung 11 hergestellt werden. Das Fräswerkzeug 15 besteht aus einem elektrisch leitenden Material.

Beim Ausbilden der zweiten Vertiefung 11 mit Hilfe des Fräswerkzeugs 15 werden die Anschlusskontakte 12 und insbesondere auch die Elektrodenstruktur 13 auf der Leiterplatte 5 freigelegt. Während dieses Freilegens kommt es einmal oder auch mehrmals dazu, dass das Fräswerkzeug 15 die beiden Elektroden 14 der Elektrodenstruktur 13 kurzzeitig miteinander verbindet. Dadurch wird der Reset-Eingang des ersten Mikrocontrollers 6 jeweils kurzzeitig auf Masse gelegt und anschließend durch den Pull-up-Widerstand wieder auf Versorgungsspannungsniveau hoch gezogen. Eine derartige Potentialänderung am Reset-Eingang des ersten Mikrocontrollers 6 löst ein Zurücksetzen des ersten Mikrocontrollers 6 aus, so dass sich der erste Mikrocontroller 6 nach dem Kurzschließen der beiden Elektroden 14 durch das Fräswerkzeug 15 in einem definierten Zustand befindet. Das Rücksetzen des ersten Mikrocontrollers 6 wird selbst dann ordnungsgemäß durchgeführt, wenn die Elektroden 14 durch das Fräswerkzeug 15 beschädigt oder gar zerstört werden.

Um etwaige schädliche Kurzschlüsse durch das Fräswerkzeug 15 zwischen sonstigen Anschlusskontakten 12 zu vermeiden, die im Bereich der zweiten Vertiefung 11 angeordnet und nicht mit der Elektrodenstruktur 13 verbunden sind, ist der Querschnitt des Fräswerkzeugs 15 so klein gewählt, dass der Abstand zwischen den Anschlusskontakten 12 durch das Fräswerkzeug 15 nicht überbrückt werden kann. Zu kleinen Werten hin ist der Querschnitt des Fräswerkzeugs 15 allerdings dadurch begrenzt, dass es möglich sein muss, mit dem Fräswerkzeug 15 die beiden Elektroden 14 der Elektrodenstruktur 13 miteinander zu verbinden. Die weitere Vorgehensweise nach Ausbildung der zweiten Vertiefung 11 wird anhand von Fig. 5 erläutert.

Fig. 5 zeigt die gemäß der ersten Variante des erfindungsgemäßen Verfahrens hergestellte Chipkarte 1 im fertig gestellten Zustand in einer den Fig. 1 bis 3 entsprechenden Darstellung. Zur Fertigstellung der Chipkarte 1 wird in die beiden Vertiefungen 10 und 11 ein zweistufig ausgebildetes Chipmodul 16 eingesetzt und über elektrische Verbindungselemente 17 mit den Anschlusskontakten 12 auf der Leiterplatte 5 verbunden. Zur mechanischen Fixierung wird das Chipmodul 16 mit dem Kartenkörper 2 verklebt. Das Chipmodul 16 weist einen zweiten Mikrocontroller 18 auf, in dem beispielsweise eine Anwendungssoftware der Chipkarte 1 implementiert ist. Über den ersten Mikrocontroller 6 hat der zweite Mikrocontroller 18 Zugriff auf die Anzeigevorrichtung 9. Weiterhin weist das Chipmodul 16 ein Kontaktfeld 19 für eine berührende Kontaktierung durch ein externes Gerät auf.

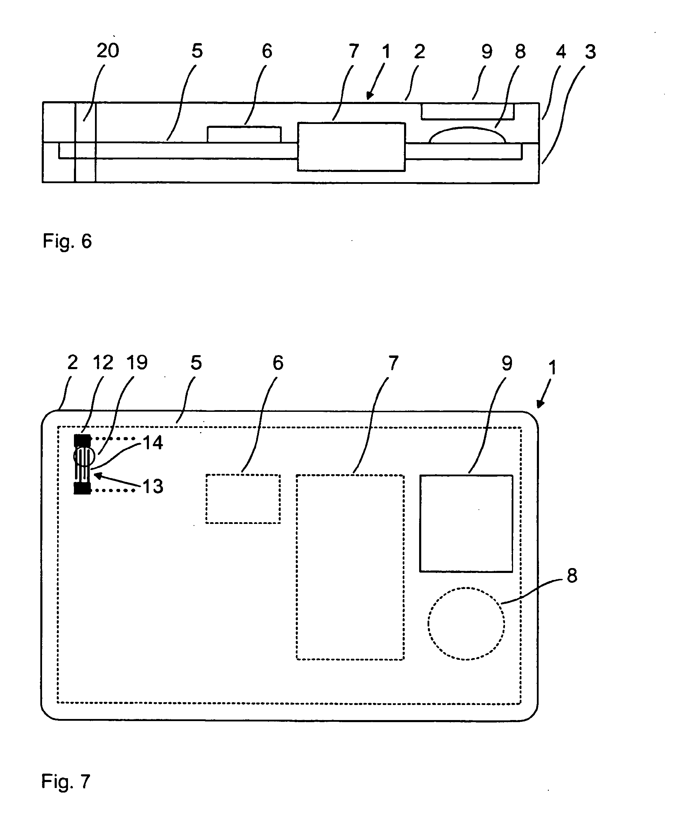

Fig. 6 zeigt eine gemäß einer zweiten Variante des erfindungsgemäßen Verfahrens hergestellte Chipkarte 1 im fertig gestellten Zustand in einer Fig. 5 entsprechenden Darstellung. Eine zugehörige schematische Aufsicht ist in Fig. 7 dargestellt.

Im Unterschied zur ersten Verfahrensvariante werden bei der zweiten Verfahrensvariante keine Vertiefungen 10 und 11 für das Chipmodul 16 in den Kartenkörper 2 eingearbeitet, da bei der in Fig. 6 und 7 dargestellten Chipkarte 1 kein Chipmodul 16 vorgesehen ist. Ein Zurücksetzen des ersten Mikrocontrollers 6 bei der Ausbildung der zweiten Vertiefung 11 kommt daher für die zweite Verfahrensvariante nicht in Frage. Stattdessen erfolgt das Zurücksetzen des ersten Mikrocontrollers 6 bei der zweiten Verfahrensvariante bei der Ausbildung eines Durchgangslochs 20 im Kartenkörper 2. Das Durchgangsloch 20 wird bevorzugt in der Nähe einer Ecke des Kartenkörpers 2 ausgebildet und kann Dekorationszwecken dienen oder auch ein Band, eine Kette usw. zu Befestigungszwecken aufnehmen.

Die Elektrodenstruktur 13 ist auf der Leiterplatte 5 im Bereich des Durchgangslochs 20 angeordnet und wird bei der Herstellung des Durchgangslochs 20 durchtrennt. In Fig. 7 ist die Elektrodenstruktur 13 aus Gründen der Anschaulichkeit vollständig, d. h. auch innerhalb des Durchgangslochs 20 eingezeichnet. Tatsächlich ist nach Ausbildung des Durchgangslochs 20 die Elektrodenstruktur 13 dort nicht mehr vorhanden. Das Durchgangsloch 20 wird beispielsweise durch Stanzen oder Fräsen mittels eines elektrisch leitenden Werkzeugs hergestellt. Dies hat zur Folge, dass die Elektroden 14 der Elektrodenstruktur 13 zumindest während des Durchtrennens kurzzeitig miteinander verbunden werden, so dass ein Zurücksetzen des ersten Mikrocontrollers 6 veranlasst wird.

Bei der gemäß der zweiten Verfahrensvariante hergestellten Chipkarte 1 ist der erste Mikrocontroller 6 vorzugsweise so ausgebildet, dass er nicht nur in der Lage ist, die Anzeigevorrichtung 9 anzusteuern, sondern auch Aufgaben des dort nicht vorgesehenen zweiten Mikrocontrollers 18 zu übernehmen.

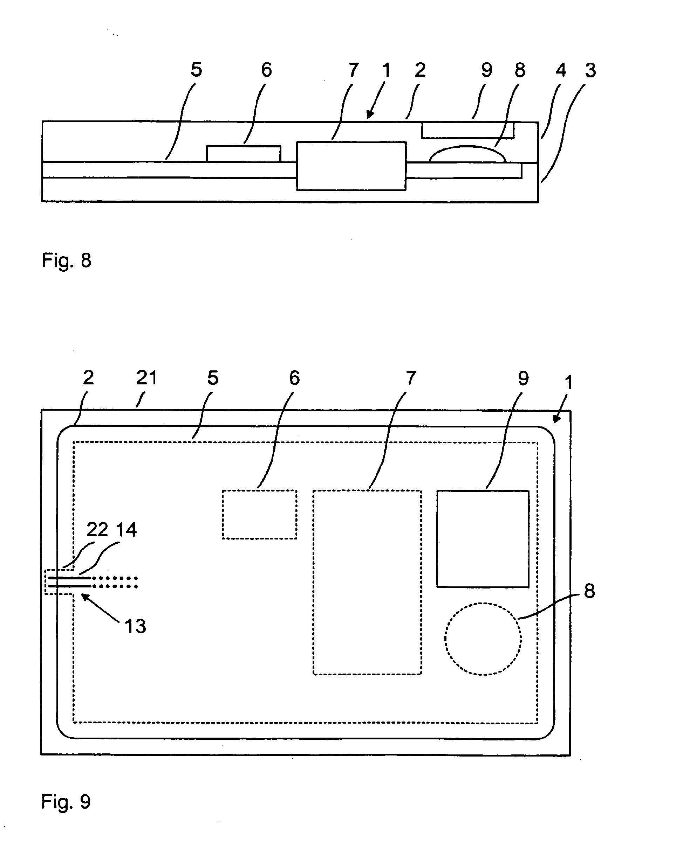

Fig. 8 zeigt eine gemäß einer dritten Variante des erfindungsgemäßen Verfahrens hergestellte Chipkarte 1 im fertig gestellten Zustand in einer Fig. 5 entsprechenden Darstellung. Fig. 9 zeigt die Chipkarte 1 aus Fig. 8 zu einem früheren Zeitpunkt, zu dem sie noch Bestandteil eines Bogens 21 ist, in einer schematischen Aufsicht. Der Bogen 21 weist bei gleicher Dicke wie die Chipkarte 1 größere laterale Abmessungen auf. Insbesondere kann der Bogen 21 mehrere lateral nebeneinander angeordnete Chipkarten 1 aufweisen. In Fig. 9 ist allerdings lediglich die Außenkontur einer einzigen Chipkarte 1 dargestellt. Statt des Bogens 21 kann auch eine Bahn vorgesehen sein.

Wie weiter aus Fig. 9 ersichtlich ist, weist die Leiterplatte 5 einen Fortsatz 22 auf, der sich bis über die Außenkontur der Chipkarte 1 hinaus erstreckt. Im Bereich dieses Fortsatzes 22 ist die Elektrodenstruktur 13 angeordnet, wobei die beiden Elektroden 14 diesmal nicht kammförmig ineinander greifen, sondern als zwei parallel zueinander verlaufende Leiterbahnen ausgebildet sind. Beim Ausstanzen der Chipkarte 1 aus dem Bogen 21 werden die beiden Elektroden 14 der Elektrodenstruktur 13 durchtrennt. Wenn ein elektrisch leitendes Stanzwerkzeug verwendet wird, werden die Elektroden 14 beim Auftreffen des Stanzwerkzeugs kurzzeitig miteinander verbunden, so dass ein Zurücksetzen des ersten Mikrocontrollers 6 ausgelöst wird. Bei der dritten Verfahrensvariante ist somit zum Zurücksetzen des ersten Mikrocontrollers 6 weder die Herstellung von Vertiefungen 10 und 11 noch die Herstellung eines Durchgangslochs 20 erforderlich.

## Patentansprüche

1. Verfahren zur Herstellung eines tragbaren Datenträgers (1) mit den Schritten:
- Verbinden wenigstens einer elektronischen Schaltung (6) mit einer elektrisch leitenden Struktur (13), mit deren Hilfe eine Überführung der elektronischen Schaltung (6) von einem undefinierten in einen definierten Zustand ausgelöst werden kann,
- Umgeben der elektronischen Schaltung (6) und der elektrisch leitenden Struktur (13) derart von einem Material (2), dass die elektrisch leitende Struktur (13) für eine berührende Kontaktierung nicht mehr zugänglich ist,
**gekennzeichnet durch,**
teilweises Entfernen des umgebenden Materials (2) mit Hilfe eines Werkzeugs (15), wobei zeitweise ein elektrischer Kontakt zwischen dem Werkzeug (15) und der elektrisch leitenden Struktur (13) ausgebildet wird, so dass beim Entfernen ein Reset, als die Überführung der elektronischen Schaltung (6) in den definierten Zustand, **durch** das Werkzeug (15) ausgelöst wird, um zu verhindern, dass die elektronische Schaltung (6) des tragbaren Datenträgers (1) bei der Herstellung des tragbaren Datenträgers (1) dauerhaft in den undefinierten Zustand versetzt wird und **dadurch** der tragbare Datenträger (1) unbrauchbar wird.

2. Verfahren nach einem der vorhergehenden Ansprüche, **dadurch gekennzeichnet, dass** beim Entfernen des Materials (2) mehrere Elemente (14) der elektrisch leitenden Struktur (13) miteinander elektrisch leitend verbunden werden.

3. Verfahren nach einem der vorhergehenden Ansprüche, **dadurch gekennzeichnet, dass** beim Entfernen des Materials (2) die elektrisch leitende Struktur (13) teilweise entfernt wird.

4. Verfahren nach einem der vorhergehenden Ansprüche, **dadurch gekennzeichnet, dass** das Überführen der elektronischen Schaltung (6) in den definierten Zustand bei der Ausbildung einer Ausnehmung (11, 20) ausgelöst wird.

5. Verfahren nach Anspruch 4, **dadurch gekennzeichnet, dass** die Ausnehmung (11) mit Hilfe eines Werkzeugs (15) ausgebildet wird, dessen Abmessungen so gewählt sind, dass der minimale Abstand zwischen Anschlusskontakten (12), die im Bereich der Ausnehmung (11) angeordnet sind, bei der Ausbildung der Ausnehmung (11) durch das Werkzeug (15) nicht überbrückt wird.

6. Verfahren nach einem der Ansprüche 4 oder 5, **dadurch gekennzeichnet, dass** in die Ausnehmung (11) eine Komponente des tragbaren Datenträgers (1), insbesondere eine weitere elektronische Schaltung (18), eingesetzt wird.

7. Verfahren nach Anspruch 4, **dadurch gekennzeichnet, dass** die Ausnehmung (20) als ein Durchgangsloch ausgebildet wird.

8. Verfahren nach einem der vorhergehenden Ansprüche, **dadurch gekennzeichnet, dass** das Überführen der elektronischen Schaltung (6) in den definierten Zustand bei der Ausbildung der Außenkontur des tragbaren Datenträgers (1) ausgelöst wird.

9. Halbzeug zur Herstellung wenigstens eines tragbaren Datenträgers (1), mit wenigstens einer elektronischen Schaltung (6), die mit einer elektrisch leitenden Struktur (13) verbunden ist, wobei durch eine berührende Kontaktierung der elektrisch leitenden Struktur (13) ein Reset, also eine Überführung der elektronischen Schaltung (6) von einem undefinierten in einen definierten Zustand auslösbar ist, **dadurch gekennzeichnet, dass** die elektrisch leitende Struktur (13) derart von einem Material (2) umgeben ist, dass diese für eine berührende Kontaktierung nicht zugänglich ist und so angeordnet ist, dass bei einem teilweisen Entfernen des umgebenden Materials mit Hilfe eines Werkzeugs das Überführen der elektronischen Schaltung in den definierten Zustand durch einen zeitweise ausgebildeten elektrischen Kontakt zwischen dem Werkzeug und der elektrisch leitenden Struktur (13) ausgelöst werden kann, um zu verhindern, dass die elektronische Schaltung (6) des tragbaren Datenträgers (1) bei der Herstellung des tragbaren Datenträgers (1) dauerhaft in den undefinierten Zustand versetzt wird und dadurch der tragbare Datenträger (1) unbrauchbar wird.

10. Halbzeug nach Anspruch 9, **dadurch gekennzeichnet, dass** die elektrisch leitende Struktur (13) mehrere benachbart zueinander angeordnete Elemente (14) aufweist.

11. Halbzeug nach einem der Ansprüche 9 oder 10, **dadurch gekennzeichnet, dass** sich die elektrisch leitende Struktur (13) über die für den tragbaren Datenträger (1) vorgesehene Außenkontur hinaus erstreckt.

12. Halbzeug nach einem der Ansprüche 10 oder 11, **dadurch gekennzeichnet, dass** die elektrisch leitende Struktur (13) in einem Bereich angeordnet ist, der für die Ausbildung einer Ausnehmung (11, 20) vorgesehen ist.

## Claims

1. A method for producing a portable data carrier (1) having the steps of
- connecting at least one electronic circuit (6) to an electroconductive structure (13) by means of which a transitioning of the electronic circuit (6) from an undefined to a defined state can be triggered,
- surrounding the electronic circuit (6) and the electroconductive structure (13) by a material (2) such that the electroconductive structure (13) is no longer accessible for a touching-type contacting,
**characterized by**
partly removing the surrounding material (2) by means of a tool (15), thereby temporarily forming an electrical contact between the tool (15) and the electroconductive structure (13), so that upon removal a reset, i.e. the transitioning of the electronic circuit (6) to the defined state, is triggered by the tool (15) in order to prevent the electronic circuit (6) of the portable data carrier (1) from being shifted to the undefined state permanently upon production of the portable data carrier (1) and the portable data carrier (1) thereby becoming useless.

2. The method according to any of the preceding claims, **characterized in that** upon removal of the material (2) several elements (14) of the electroconductive structure (13) are electroconductively interconnected.

3. The method according to either of the preceding claims, **characterized in that** upon removal of the material (2) the electroconductive structure (13) is partly removed.

4. The method according to any of the preceding claims, **characterized in that** the transitioning of the electronic circuit (6) to the defined state is triggered upon formation of a recess (11, 20).

5. The method according to claim 4, **characterized in that** the recess (11) is formed by means of a tool (15) whose dimensions are so chosen that the minimum distance between connecting contacts (12) which are arranged in the area of the recess (11) is not bridged upon formation of the recess (11) by the tool (15).

6. The method according to either of claims 4 to 5, **characterized in that** a component of the portable data carrier (1), in particular a further electronic circuit (18), is inserted into the recess (11).

7. The method according to claim 4, **characterized in that** the recess (20) is formed as a through hole.

8. The method according to any of the preceding claims, **characterized in that** the transitioning of the electronic circuit (6) to the defined state is triggered upon formation of the outside contour of the portable data carrier (1).

9. A half-product for producing at least one portable data carrier (1), having at least one electronic circuit (6) which is connected to an electroconductive structure (13), whereby a reset, i.e. a transitioning of the electronic circuit (6) from an undefined to a defined state, is triggerable by a touching-type contacting of the electroconductive structure (13), **characterized in that** the electroconductive structure (13) is surrounded by a material (2) such that said structure is inaccessible for a touching-type contacting and is so arranged that upon a partial removal of the surrounding material by means of a tool the transitioning of the electronic circuit to the defined state can be triggered by a temporarily formed electrical contact between the tool and the electroconductive structure (13) in order to prevent the electronic circuit (6) of the portable data carrier (1) from being shifted to the undefined state permanently upon production of the portable data carrier (1) and the portable data carrier (1) thereby becoming useless.

10. The half-product according to claim 9, **characterized in that** the electroconductive structure (13) has several elements (14) arranged adjacent to each other.

11. The half-product according to either of claims 9 to 10, **characterized in that** the electroconductive structure (13) extends beyond the outside contour intended for the portable data carrier (1).

12. The half-product according to either of claims 10 to 11, **characterized in that** the electroconductive structure (13) is arranged in an area which is intended for the formation of a recess (11, 20).

## Revendications

1. Procédé de fabrication d'un support de données portable (1), comprenant les étapes
- raccordement d'au moins un circuit électronique (6) à une structure électroconductrice (13) à l'aide de laquelle une conversion faisant passer le circuit électronique (6) d'un état indéfini à un état défini peut être déclenchée,
- enveloppement du circuit électronique (6) et de la structure électroconductrice (13) avec un matériau (2) de telle manière que la structure électroconductrice (13) n'est plus accessible pour une mise en contact avec attouchement,
**caractérisé par**
un enlèvement partiel du matériau enveloppant (2) à l'aide d'un outil (15), un contact électrique étant temporairement établi entre l'outil (15) et la structure électroconductrice (13), de telle sorte que, lors de l'enlèvement, un reset en tant que la conversion faisant passer le circuit électronique (6) à l'état défini est déclenché par l'outil (15) pour empêcher que le circuit électronique (6) du support de données portable (1) soit, lors de la fabrication du support de données portable (1), mis durablement dans l'état indéfini et que le support de données portable (1) devienne ainsi inutilisable.

2. Procédé selon une des revendications précédentes, **caractérisé en ce que**, lors de l'enlèvement du matériau (2), plusieurs éléments (14) de la structure électroconductrice (13) sont raccordés entre eux de manière électroconductrice.

3. Procédé selon une des revendications précédentes; **caractérisé en ce que**, lors de l'enlèvement du matériau (2), la structure électroconductrice (13) est partiellement enlevée.

4. Procédé selon une des revendications précédentes, **caractérisé en ce que** la conversion faisant passer le circuit électronique (6) à l'état défini est déclenchée lors du façonnage d'une encoche (11. 20).

5. Procédé selon la revendication 4, **caractérisé en ce que** l'encoche (11) est façonnée à l'aide d'un outil (15) dont les dimensions sont choisies de telle manière que l'espacement minimal entre des plots de connexion (12) agencés dans la zone de l'encoche (11) ne sont pas pontables lors du façonnage de l'encoche (11) par l'outil (15).

6. Procédé selon une des revendications 4 ou 5, **caractérisé en ce qu**'une composante du support de données portable (1), notamment un circuit électronique supplémentaire (18), est insérée dans l'encoche (11).

7. Procédé selon la revendication 4, **caractérisé en ce que** l'encoche (20) est façonnée sous forme d'un trou d'interconnexion.

8. Procédé selon une des revendications précédentes, **caractérisé en ce que** la conversion faisant passer le circuit électronique (6) à l'état défini est déclenchée lors du façonnage du contour extérieur du support de données portable (1).

9. Semi-fini pour la fabrication d'au moins un support de données portable (1), comportant au moins un circuit électronique (6) qui est raccordé à une structure électroconductrice (13), un reset, c'est-à-dire une conversion faisant passer le circuit électronique (6) d'un état indéfini à un état défini, pouvant être déclenché par une mise en contact avec attouchement de la structure électroconductrice (13), **caractérisé en ce que** la structure électroconductrice (13) est enveloppée de telle manière d'un matériau (2) que cette dernière n'est pas accessible pour une mise en contact avec attouchement et est disposée de telle manière que, lors d'un enlèvement partiel du matériau enveloppant à l'aide d'un outil, la conversion faisant passer le circuit électronique à l'état défini peut être déclenchée par un contact électrique temporairement établi entre l'outil et la structure électroconductrice (13) pour empêcher que le circuit électronique (6) du support de données portable (1) soit, lors de la fabrication du support de données portable (1), mis durablement dans l'état indéfini et que le support de données portable (1) devienne ainsi inutilisable.

10. Semi-fini selon la revendication 9, **caractérisé en ce que** la structure électroconductrice (13) comporte plusieurs éléments (14) agencés de manière avoisinante les uns par rapport aux autres.

11. Semi-fini selon une des revendications 9 ou 10, **caractérisé en ce que** la structure électroconductrice (13) s'étend au-delà du contour extérieur prévu pour le support de données portable (1).

12. Semi-fini selon une des revendications 10 ou 11, **caractérisé en ce que** la structure électroconductrice (13) est agencée dans une zone qui est prévue pour le façonnage d'une encoche (11, 20).
